# EUROPÄISCHE PATENTANMELDUNG

(11) **EP 4 685 471 A1**
(43) Veröffentlichungstag der Anmeldung: **28.01.2026**
(21) Anmeldenummer: 25187719.7
(22) Anmeldetag: 07.07.2025
(51) Int. Cl.: G01N 21/88, G01N 21/90

(54) **VERFAHREN UND VORRICHTUNG ZUM INSPIZIEREN DES BODENS EINES GEFÄSSES**

(30) Priorität: 25.07.2024 DE 102024121199
(71) Anmelder: Emhart Glass S.A., 6312 Steinhausen (CH)
(72) Erfinder: HUHN, Thomas, 80686 München (DE)
(74) Vertreter: Grünecker Patent- und Rechtsanwälte PartG mbB

(57) **Zusammenfassung**

Ein Verfahren zum Erzeugen einer Abbildung (A) eines transluzenten oder transparenten Bodens (5) eines Gefäßes (3) verwendet eine Matrixkamera (39) mit einer in einer Mehrzahl von Zeilen (Z) und einer Mehrzahl von Spalten (S) angeordneten Pixeln (40). Die Matrixkamera (39) nimmt eine Serie von Einzelaufnahmen (E) von Bereichen B) des Bodens (5) des Gefäßes (3) auf, die sich abschnittsweise überlappen, während der Boden (5) des Gefäßes (3) mit einer auf der der Matrixkamera (39) eggenüberliegenden Seite angeordneten Lichtquelle (37) durchleuchtet wird. Aus den Einzelaufnahmen (E) wird eine digitale Abbildung (A) des Bodens (5) des Gefäßes (3) zusammengesetzt. Die Erfindung zeichnet sich dadurch aus, dass der in einer Einzelaufnahme (E) aufgenommene Bereich (B) des Bodens (5) des Gefäßes (3) definiert wird durch eine Beleuchtungsstruktur (50), dass zwischen zwei Einzelaufnahmen (E) die Beleuchtungsstruktur (50) relativ zum Boden (5) des Gefäßes (3) verlagert wird, und dass während des Aufnehmens der Serie von Einzelaufnahmen (E) das Gefäß (3) und die Matrixkamera (39) rotationsinvariant zueinander bleiben. Die Erfindung bezieht sich auch auf eine Vorrichtung (24) zum Durchführen des Verfahrens.

## Beschreibung

Die vorliegende Erfindung bezieht sich auf ein Verfahren zum Erzeugen einer Abbildung eines transluzenten oder transparenten Bodens eines Gefäßes gemäß dem Oberbegriff des Anspruchs 1 sowie auf eine für solch ein Verfahren geeignete Vorrichtung.

Im Kontext der Erfindung ist mit "transluzent" gemeint, dass der Boden des Gefäßes im weitesten Sinne dazu in der Lage ist, elektromagnetische Wellen (insbesondere im sichtbaren Spektralbereich) vollständig oder zumindest teilweise durchzulassen. Je geringer der Anteil der Streuung der elektromagnetischen Strahlung beim Durchtritt durch den Boden ist, desto eher kann man den Boden als "transparent" bezeichnen, erst recht bei der (vollständigen) Abwesenheit von Streuung. Der Übergang zwischen transparent und transluzent ist fließend. Jedes transparente Material ist immer auch transluzent.

Insbesondere bei der industriellen Herstellung von Glasgefäßen kann es, wenn auch in geringem Umfang, zur Bildung von Fehlstellen im Boden der Gefäße kommen, bspw. von Defekten, Rissen, Farb-, Fremdmaterial- oder Luft-Einschlüssen. Werden solche Fehlstellen rechtzeitig erkannt, können die fehlerhaften Gefäße aus dem Herstellungsprozess ausgeschleust werden. Die Erfindung soll das Erkennen solcher Fehlstellen ermöglichen.

Ein gattungsgemäßes Verfahren zum Erzeugen von Abbildungen eines Bodens eines Glasgefäßes geht aus der DE102022123099A1 hervor. Dort werden mehrere Einzelaufnahmen eines Bodens des Glasgefäßes von einer Matrixkamera aufgenommen, während das Glasgefäß um seine eigene Achse relativ zur Matrixkamera rotiert, bevor die Einzelaufnahmen zu einer Abbildung zusammengesetzt werden.

Ein weiteres Verfahren und eine entsprechende Vorrichtung zum Inspizieren von Gefäßen wird in der DE102022123101A1 beschrieben. Hier befindet sich unter dem Gefäß eine opake Tragstruktur mit zumindest zwei Aussparungen, und während der Inspektion erfolgt ebenfalls eine Drehung des Gefäßes.

Die EP2434276B1 offenbart ein weiteres Inspektionsverfahren zur Prüfung von transparenten oder transluzenten Behältern auf Fehler wie Sprünge, Risse, Blasen oder dergleichen. Die Behälter werden von einer Fördereinrichtung kontinuierlich entlang einer Förderrichtung gefördert. Jeder Behälter durchläuft eine Inspektionsstation, in der eine berührungsfreie Inspektion zumindest eines ausgewählten Bereichs eines jeden Behälters stattfindet.

Weitere Vorrichtungen und Verfahren zum Prüfen transparenter oder transluzenter Gefäße auf Fehlstellen gehen hervor aus der DE102005044206B4, der DE2545678A1, der DE102011013551A1, der DE102020118470A1, der DE20010813U1, der DE29518639U1, der DE69408899T2 oder der EP0472881A2.

Insbesondere die jüngeren Verfahren gemäß DE102022123101A1 oder DE102022123099A1, die Matrixkameras einsetzen, bieten bereits eine sehr hohe Erfolgsquote beim Detektieren von Sonder- oder Fehlstellen in Gefäßen. Für bestimmte Anwendungszwecke zeigt sich jedoch noch Verbesserungsbedarf.

Die Aufgabe der vorliegenden Erfindung ist es, die Zuverlässigkeit und das Anwendungsspektrum beim Inspizieren von Böden von Gefäßen weiter zu verbessern.

Diese Aufgabe wird jeweils selbstständig gelöst durch ein Verfahren mit den Merkmalen des Anspruchs 1 oder durch eine Vorrichtung mit den Merkmalen des Anspruchs 9. Vorteilhafte Weiterbildungen sind Gegenstand der abhängigen Ansprüche.

In einem ersten Aspekt der Erfindung wird ein Verfahren zum Erzeugen einer Abbildung eines transluzenten oder sogar transparenten Bodens eines Gefäßes bereitgestellt, das eine Matrixkamera mit in einer Mehrzahl von Zeilen und einer Mehrzahl von Spalten angeordneten Pixeln verwendet. Mittels der Matrixkamera wird eine Serie von Einzelaufnahmen von Bereichen des Bodens des Gefäßes aufgenommen, wobei sich einander benachbarte Einzelaufnahmen abschnittsweise überlappen. Während einer Einzelaufnahme wird der Boden des Gefäßes mittels einer auf der der Matrixkamera gegenüberliegenden Seite des Gefäßes angeordneten Lichtquelle durchleuchtet. Aus der Serie von Einzelaufnahmen wird eine digitale Abbildung des Bodens des Gefäßes zusammengesetzt. Das Gefäß insgesamt oder zumindest sein Boden können beispielsweise Glas oder transluzenten sogar transparenten Kunststoff als Material aufweisen. Bei der Kamera kann es sich um eine CCD-Kamera oder um eine CMOS-Kamera handeln, bspw. um eine sogenannte High-Speed-Kamera. Die Lichtquelle kann eine gepulste Lichtquelle sein, die vorzugsweise mit dem Aufnehmen der Einzelaufnahmen durch die Matrixkamera synchronisiert betrieben wird.
Typischerweise werden die Gefäße in der Maschine nicht fixiert, sondern mit Hilfe eines Sternrads von Inspektionsstation zu Inspektionsstation gefahren. Das Sternrad schiebt die Behälter herkömmlicherweise über Blechplatten, die sogenannten "dead plates". Diese sind bisher ganzflächig lichtundurchlässig und verhindern entsprechend eine Hintergrundbeleuchtung. Das Aufnehmen und Zusammensetzen von Einzelaufnahmen ermöglicht es nun, Aufnahmen des Gefäßbodens zu gewinnen, ohne die Möglichkeit eines Tragens oder Abstützens der Gefäße aufgeben zu müssen.

Das Verfahren zeichnet sich gegenüber herkömmlichen Verfahren dadurch aus, dass der in einer Einzelaufnahme aufgenommene Bereich des Bodens des Gefäßes definiert wird durch eine Beleuchtungsstruktur. Der Begriff "Beleuchtungsstruktur" ist dabei gelichbedeutend mit "strukturierte Beleuchtung". Damit ist gemeint, dass der Boden des Gefäßes nicht vollflächig durchleuchtet wird, jedenfalls nicht mit homogener Intensität, sondern dass es während des Erstellens von Einzelaufnahmen beleuchtete und unbeleuchtete (d.h. mit geringerer Intensität durchleuchtete) Bereiche des Bodens gibt. Im einfachsten Fall gibt es einen beleuchteten Bereich, der auf einer Seite, auf zwei Seiten oder auf mehr Seiten von unbeleuchteten Bereichen umgeben ist. Alternativ kann es mehrere beleuchtete Bereiche geben. Diese mehreren beleuchteten Bereiche können symmetrisch oder gar regelmäßig angeordnet sein, beispielsweise in einem eindimensionalen oder zweidimensionalen Muster.

Das Verfahren zeichnet sich ferner dadurch aus, dass zwischen zwei Einzelaufnahmen die Beleuchtungsstruktur relativ zum Boden des Gefäßes verlagert wird, und dass während des Aufnehmens der Serie von Einzelaufnahmen das Gefäß und die Matrixkamera rotationsinvariant zueinander bleiben. Mit "rotationsinvariant" ist im Kontext der Erfindung gemeint, dass das Gefäß und die Matrixkamera nicht relativ zueinander rotieren. Durch diese Maßnahme unterscheidet sich das Verfahren signifikant von dem beispielsweise aus der DE102022123099A1 oder der DE102022123101A1 bekannten Verfahren, die jeweils auf einer Relativdrehung von Gefäß und Kamera beruhten. Im erfindungsgemäßen Verfahren hingegen können Gefäß und Matrixkamera relativ zueinander in Ruhe bleiben. Ein Abtasten des Bodens des Gefäßes wird im Gegenteil dadurch erreicht, dass die Beleuchtungsstruktur zwischen zwei Einzelaufnahmen verlagert wird. Auf diese Weise kann die Beleuchtungsstruktur gewissermaßen über den Boden des Gefäßes "wandern". Das relative Verlagern der Beleuchtungsstruktur relativ zum Boden des Gefäßes zwischen zwei Einzelaufnahmen kann erfolgen, indem sich die Beleuchtungsstruktur und/oder das Gefäß bewegen.
Die Beleuchtungsstruktur kann z.B. entsprechend der vorstehenden Beschreibung als ein Element ausgeführt sein. Zweckmäßiger ist es jedoch, die Beleuchtungseinheit (Lichtquelle) vollflächig und stationär auszuführen und eine vorgelagerte Struktur zu bewegen. Dies hat unter anderem den Vorteil, dass die Struktur durch das Darüberschieben der Behälter einem gewissen Verschleiß unterliegt und einfacher und günstiger auszutauschen ist als eine aufwendige Beleuchtungseinheit.

Gegenüber bisherigen Prüfverfahren hat das erfindungsgemäße Verfahren verschiedene Vorteile. In bisherigen Verfahren konnten sich beispielsweise dadurch Messfehler ergeben, dass die Gefäße relativ zur Kamera gedreht werden mussten. Bei dieser Relativdrehung konnte ein Schlupf auftreten, der dazu führte, dass das Ausmaß der Relativdrehung nicht mit völliger Präzision bestimmt werden konnte. Besonders stark ausgeprägt ist dieser Effekt bei unrunden Gefäßen, die sich prinzipbedingt schwerer gleichmäßig drehen lassen als rotationssymmetrische Gefäße. Beim erfindungsgemäßen Verfahren hingegen wird dieser Messfehler ausgeschlossen, da Kamera und Gefäß relativ zueinander rotationsinvariant bleiben. Folglich eignet sich das erfindungsgemäße Verfahren hervorragend auch für Gefäße mit einem nicht-kreisförmigen Querschnitt, sondern z.B. mit einem rechteckigen, quadratischen oder beliebigem Querschnitt.

Das erfindungsgemäße Verfahren kann außerdem so umgesetzt werden, dass das Gefäß während des Aufnehmens der Einzelaufnahmen nicht nur relativ zur Matrixkamera rotationsinvariant bleibt, sondern auch zur Anlage oder Inspektionsstation insgesamt. Konkret kann sich das Gefäß während der Inspektion in Ruhe befinden, d.h. im Raum weder translatorisch bewegt noch rotiert werden. Dies erlaubt es beispielsweise, bei der Inspektion auch kleine Scherben im Inneren der Gefäße zu entdecken, die durch Produktionsfehler entstanden sein können. Mit den bisherigen Inspektionsverfahren war dies nicht zuverlässig möglich, da sich kleine Scherben wegen der (zum Teil sehr schnellen) Drehung der Gefäße an deren Innenwände anlegten und dann nicht mehr sicher erkannt werden konnten, oder während der Drehung aufgrund der Massenträgheit quasi stationär blieben, während sich der Behälterboden unter ihnen drehte. Sofern sich eine Scherbe hierbei dauerhaft außerhalb des beleuchteten Bereichs befand, wurde sie in keinem Teilbild jemals sichtbar. Im erfindungsgemäßen Verfahren hingegen können Fliehkräfte vermieden werden, die Scherben an die Innenwände der Gefäße verlagern. Auf diese Weise erhöht sich das Anwendungsspektrum des Inspektionsverfahrens.

Vorzugsweise erfolgt das Verlagern der Beleuchtungsstruktur zwischen zwei Einzelaufnahmen relativ zum Boden des Gefäßes translatorisch und/oder rotatorisch. Allein translatorische oder allein rotatorische Verlagerungen haben den Vorteil, mechanisch vergleichsweise einfach umsetzbar zu sein. Denkbar ist allerdings auch eine kombiniert translatorisch-rotatorische Verlagerung.

Die Beleuchtungsstruktur kann beispielsweise einen rechteckigen, vorzugsweise quadratischen, oder einen gitterförmigen oder streifenförmigen Beleuchtungsbereich definieren. Ein rechteckiger oder quadratischer Beleuchtungsbereich bedeutet, dass ein rechteckiger oder quadratischer Bereich des Bodens des Gefäßes beleuchtet wird, während der übrige Bereich des Gefäßbodens unbeleuchtet bleibt. Der Vorteil solcher recht einfachen Beleuchtungsstrukturen liegt darin, dass ein Auslesebereich der Matrixkamera besonders gut an diese Form von Beleuchtungsstrukturen angepasst werden kann, auch wenn die Beleuchtungsstrukturen relativ zur Ausrichtung der Matrixkamera verschoben und/oder verdreht werden. Insbesondere ein quadratischer Beleuchtungsbereich ermöglicht dabei besonders kurze Bildauslesezeiten, d.h. eine hohe Aufnahmegeschwindigkeit. Ein gitterförmiger oder streifenförmiger Beleuchtungsbereich hingegen bietet den Vorteil, den Bodens des Gefäßes mit einer nur sehr geringen Anzahl an Einzelaufnahmen abdecken zu können, ggf. bereits mit vier, drei, oder im Extremfall sogar nur zwei Einzelaufnahmen.

Eine Serie von Einzelaufnahmen kann also aus mindestens zwei Einzelaufnahmen, vorzugsweise jedoch aus mindestens drei, mindestens vier, mindestens 5, mindestens 10 oder sogar mindestens 15, 20, 30 oder 50 Einzelaufnahmen bestehen.

Die winklige Anordnung der Einzelaufnahmen relativ zueinander beim Zusammensetzen der Aufnahme erfolgt dabei vorzugsweise möglichst genau so, wie auch die von den Einzelaufnahmen erfassten Bereiche des Bodens winklig zueinander angeordnet sind.

Um einen Einfluss durch Bewegung des Gefäßes während der Bildaufnahmen möglichst auszuschließen ist es zweckmäßig, das Gefäß während der Dauer der Aufnahmesequenz in seiner Position zu fixieren. Eine entsprechende Fixier-Vorrichtung kann das Gefäß beispielsweise seitlich einklemmen.

Eine alternative Ausführung zur Fixierung der Gefäße könnte eine fest in das Sternrad integrierte Vorrichtung sein, die die Gefäße nicht nur einseitig durch Rollen stützt, sondern sie mit drei oder mehr Rollen so umfasst, dass sie zwar drehbar aber ansonsten fest im Sternrad verankert sind. Eine derartige Vorrichtung würde nach dem Einfahren der Gefäße in das Sternrad geschlossen und vor dem Ausfahren aus dem Sternrad wieder geöffnet werden, während des Verweilens im Sternrad und insbesondere während der Prüfvorgänge wären die Gefäße fixiert und lediglich drehbar.

Um eine ungewollte Bewegung des Gefäßes durch das Verschieben einer die Beleuchtungsstruktur definierenden Tragstruktur zu vermeiden, kann es zweckmäßig sein, den Ablauf der Bildaufnahme in mehrere zeitlich hintereinander angeordnete Segmente zu unterteilen. Im ersten Abschnitt erreicht das Gefäß die Aufnahmeposition und wird dort fixiert. Im zweiten Abschnitt senkt sich die Tragstruktur, die zuvor den Behälterboden getragen hat, etwas ab und ist nicht mehr im Kontakt mit dem nun eingeklemmt schwebenden Gefäß. Dann erfolgt die Bewegung der Tragstruktur mit dazu synchroner Bildaufnahme. Schließlich hebt sich die Tragstruktur wieder an und trägt das Gefäß wieder. Zuletzt wird die Fixiervorrichtung geöffnet und das Gefäß kann weiterbewegt werden.

Zweckmäßig ist es, wenn zum Zusammensetzen der digitalen Abbildung des Bodens des Gefäßes eine Software dazu eingerichtet ist, Sonderstellen in den Einzelaufnahmen zu erkennen und die Einzelaufnahmen unter Überlagerung der Sonderstellen aneinander zu fügen. Solche Sonderstellen können zum einen Fehlstellen sein, bspw. die bereits erwähnten Defekte, Risse, Farb- oder Lufteinschlüsse (Blasen). Zum anderen kann es sich bei Sonderstellen um gezielt in den Boden des Gefäßes eingebrachte Strukturen handeln, bspw. Text, Rillen oder Markierungen. Die Software, bspw. unter Einschluss eines Bilderfassungs-Moduls, kann dazu eingerichtet sein, solche Sonderstellen zu erkennen und die Einzelaufnahmen unter bestmöglicher Übereinstimmung der Sonderstellen geeignet aneinander zu fügen.

Das Zusammensetzen der digitalen Abbildung des Bodens des Gefäßes kann eine Rotation, eine Linearverschiebung und/oder ein Dehnen oder Stauchen einer oder mehrerer Einzelaufnahmen beinhalten. Diese Maßnahmen können z.B. auf das Ziel ausgerichtet sein, eine bestmögliche Überlagerung ermittelter Sonderstellen zu erzeugen. Zum Zusammensetzen der digitalen Abbildung des Bodens des Gefäßes kann eine künstliche Intelligenz (Artificial Intelligence, AI) zum Einsatz kommen, die mittels geeigneter Selbstlern-Prozesse eine Optimierung des Zusammensetzens der digitalen Abbildung ermöglicht.

Günstig ist es, wenn das Zusammensetzen der digitalen Abbildung des Bodens des Gefäßes unter Berücksichtigung der Verlagerung oder Relativdrehung zwischen Gefäß und Beleuchtungsstruktur zwischen je zwei Einzelaufnahmen erfolgt. Die Größe dieser Verlagerung oder Relativdrehung zwischen Gefäß und Beleuchtungsstruktur zwischen je zwei Einzelaufnahmen kann bekannt, konstant und/oder durch die Drehbewegung vorgegeben sein. Wird die Größe der vorgegebenen oder durchgeführten Verlagerung oder Relativdrehung als Eingangsgröße in der zum Zusammensetzen der digitalen Abbildung verwendeten Software verwendet, verringert dies den Bedarf an Rechenleistung und Zeit zum Zusammensetzen der digitalen Abbildung, und die Wahrscheinlichkeit eines fehlerhaften Zusammensetzens aufgrund von beispielsweise im Bild enthaltenen ähnlichen Merkmalen wird erheblich reduziert.

Die Beleuchtungsstruktur bzw. der Beleuchtungsbereich wird vorzugsweise definiert durch eine oder mehrere Aussparungen in einer unterhalb des Bodens angeordneten Maske. Die Maske kann sich in der Tragstruktur befinden oder ein Teil der Tragstruktur sein, die während der Inspektion zum Tragen des Gefäßes dient. Denkbar wäre es, dass die Maske auswechselbar ist, um bspw. die Form oder die Abmessungen des Beleuchtungsbereichs ändern zu können.

Das Verlagern der Beleuchtungsstruktur relativ zum Boden zwischen zwei Einzelaufnahmen kann z.B. dadurch bewirkt werden, dass die Maske zwischen zwei Einzelaufnahmen in einer rotatorischen oder bogenförmigen Bewegung verlagert wird. Die bogenförmige Bewegung könnte derart erfolgen, dass sie in Draufsicht eine translatorische Projektion hat. Eine solche bogenförmige Bewegung der Maske ist besonders geeignet im Zusammenhang mit einer gitterförmigen Beleuchtungsstruktur.

Bevorzugt steht der Boden des Gefäßes während der Aufnahme der Einzelaufnahmen auf einer Tragstruktur, insbesondere einer lichtdurchlässigen Stellfläche, optional mit mindestens einer Aussparung. So kann sich bspw. die Lichtquelle unterhalb der Tragstruktur oder Stellfläche befinden, während die Kamera von oben auf den Boden des Gefäßes blickt. Wenn der Boden des Gefäßes auf einer Tragstruktur steht, hat dies den Vorteil, dass sich der Boden des Gefäßes während der Aufnahme der Serie von Einzelaufnahmen stets in derselben Ebene befindet. Dies erleichtert das Scharfstellen der Einzelaufnahmen und verbessert so die Auflösung der digitalen Abbildung des Bodens. Denkbar ist jedoch auch eine andere Variante, bei welcher ein (insbesondere axialsymmetrisches) Gefäß während der Inspektion mit horizontaler Ausrichtung gelagert ist.

In einer anderen Variante ist der Boden des Gefäßes während des Aufnehmens der Einzelaufnahmen von einer unterhalb des Bodens angeordneten Tragstruktur beabstandet. Diese Variante hat den Vorteil, dass die Tragstruktur und mit ihr die Beleuchtungsstruktur während der Inspektion mittels geringerer Kräfte relativ zum Gefäß verlagert werden können, da es durch die Beabstandung keine Reibung zwischen Gefäß- und Tragstruktur gibt. Gleichzeitig verringert sich das Risiko einer unbeabsichtigten Lageveränderung des Gefäßes, die ansonsten die Qualität der Aufnahmen beeinträchtigen könnte.

Als besonders günstig hat es sich erwiesen, wenn die von der Matrixkamera aufgenommenen Einzelaufnahmen eine rechteckige Form aufweisen, d.h. ein rechteckiges Bild zeigen. Diese Form ermöglicht besonders hohe Bildaufnahmegeschwindigkeiten.

In einem zweiten Aspekt bezieht sich die Erfindung auf eine Vorrichtung zum Erzeugen einer Abbildung eines transluzenten oder gar transparenten Bodens eines Gefäßes, umfassend eine Matrixkamera mit in einer Mehrzahl von Zeilen und in einer Mehrzahl von Spalten angeordneten Pixeln, eine Lichtquelle zum Durchleuchten des Bodens des Gefäßes, eine Maske zum Erzeugen einer Beleuchtungsstruktur, d.h. einer strukturierten Beleuchtung, sowie optional einer Vorrichtung zum Fixieren der Behälter. Die Vorrichtung umfasst einen Speicher zum Speichern einer mittels der Matrixkamera aufgenommenen Serie von Einzelaufnahmen von Bereichen des Bodens des Gefäßes. Ferner umfasst die Vorrichtung eine Auswerteeinheit, die dazu eingerichtet ist, aus der Serie von Einzelaufnahmen eine digitale Abbildung des Bodens des Gefäßes zusammenzusetzen. Die Erfindung zeichnet sich dadurch aus, dass die Vorrichtung konfiguriert ist zum Verlagern der Beleuchtungsstruktur relativ zum Boden des Gefäßes zwischen zwei Einzelaufnahmen, und dass die Vorrichtung eine Haltestruktur aufweist, die dazu konfiguriert ist, während des Aufnehmens der Serie von Einzelaufnahmen das Gefäß und die Matrixkamera rotationsinvariant zueinander zu halten. Damit ergeben sich die vorstehend erläuterten Vorteile.

Zweckmäßig ist es, wenn die Beleuchtungsstruktur den in einer Einzelaufnahme aufgenommenen Bereich des Bodens des Gefäßes definiert. Beispielsweise kann die Beleuchtungsstruktur einen hell beleuchteten und einen dunklen Bereich definieren, und die Einzelaufnahme nimmt lediglich den hell beleuchteten Bereich der Beleuchtungsstruktur auf.

Vorzugsweise ist die Vorrichtung konfiguriert zum translatorischen oder rotatorischen Verlagern der Beleuchtungsstruktur relativ zum Boden des Gefäßes zwischen zwei Einzelaufnahmen. Eine solche Verlagerung der Beleuchtungsstruktur erlaubt mit konstruktiv relativ einfachen Mitteln ein Abtasten bzw. "Scannen" größerer Teile oder sogar des gesamten Bodens des Gefäßes.

Die Vorrichtung kann eine Tragstruktur zum Tragen des Gefäßes aufweisen, wobei die Tragstruktur ihrerseits eine Maske aufweist oder bildet. Diese Maske wiederum kann dazu dienen, eine großflächige Beleuchtung in eine strukturierte Beleuchtung zu überführen, d.h. in eine Beleuchtungsstruktur.

Die Beleuchtungsstruktur kann bspw. einen rechteckigen, vorzugsweise quadratischen, oder einen gitterförmigen, oder einen streifenförmigen Beleuchtungsbereich definieren. Je nach Anwendungszweck und Form der zu untersuchenden Gefäße kann die eine oder die andere Form der Beleuchtungsstruktur vorteilhaft sein.

Die Haltestruktur der Vorrichtung kann einen Greifer zum Greifen des Gefäßes aufweisen. Dieser Greifer kann verstellbar sein zwischen einer geöffneten und einer geschlossenen Stellung. Die geschlossene Stellung des Greifers erlaubt das - rotationsinvariante - Fixieren des Gefäßes relativ zur Matrixkamera; in der geöffneten Stellung des Greifers kann das Gefäß in der Inspektionsposition aufgenommen oder aus ihr entfernt werden.

Die Haltestruktur kann als Klemmvorrichtung ausgeführt sein. Hierbei kann die Klemmung auch einseitig ausgeführt sein und den Behälter an das gegenüberliegende Sternrad drücken, um ihn einzuklemmen.

Die im Hinblick auf das erfindungsgemäße Verfahren offenbarten Merkmale können einzeln oder in Kombination auch in der erfindungsgemäßen Vorrichtung zum Einsatz kommen, und umgekehrt.

Im Folgenden wird die Erfindung anhand einer Ausführungsform unter Bezugnahme auf die Figuren weiter erläutert.
Figur 1 zeigt eine schematische Draufsicht auf eine Vorrichtung zum Inspizieren von Gefäßen.
Figur 2 zeigt eine schematische Schnittansicht einer Vorrichtung zum Erzeugen einer Abbildung des Gefäßbodens gemäß einer Ausführungsform, wobei der Schnitt in Figur 1 mit I-I angedeutet ist.
Figur 3 zeigt eine schematische Darstellung mehrerer Einzelaufnahmen des Bodens des Gefäßes.
Figur 4 zeigt eine schematische Darstellung einer zusammengesetzten Abbildung des Bodens des Gefäßes.
Figur 5 zeigt ein erstes Ausführungsbeispiel einer Beleuchtungsstruktur.
Figur 6 zeigt ein zweites Ausführungsbeispiel einer Beleuchtungsstruktur.
Figur 7 zeigt ein drittes Ausführungsbeispiel einer Beleuchtungsstruktur in Draufsicht.
Figur 8 zeigt ein weiteres Ausführungsbeispiel einer gitterförmigen bzw. streifenförmigen Beleuchtungsstruktur in Draufsicht.
Figur 9 zeigt ein Ausführungsbeispiel der Vorrichtung mit einer gitterförmigen Beleuchtungsstruktur im Vertikalschnitt.
Figur 10 zeigt schematisch ein weiteres Ausführungsbeispiel der Vorrichtung in einer Seitenansicht.
Figur 11 zeigt schematisch ein weiteres Ausführungsbeispiel der Vorrichtung in einer Seitenansicht.

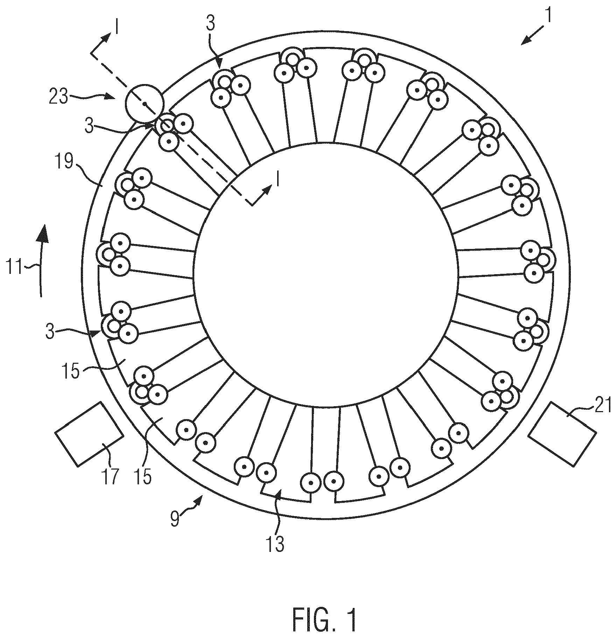

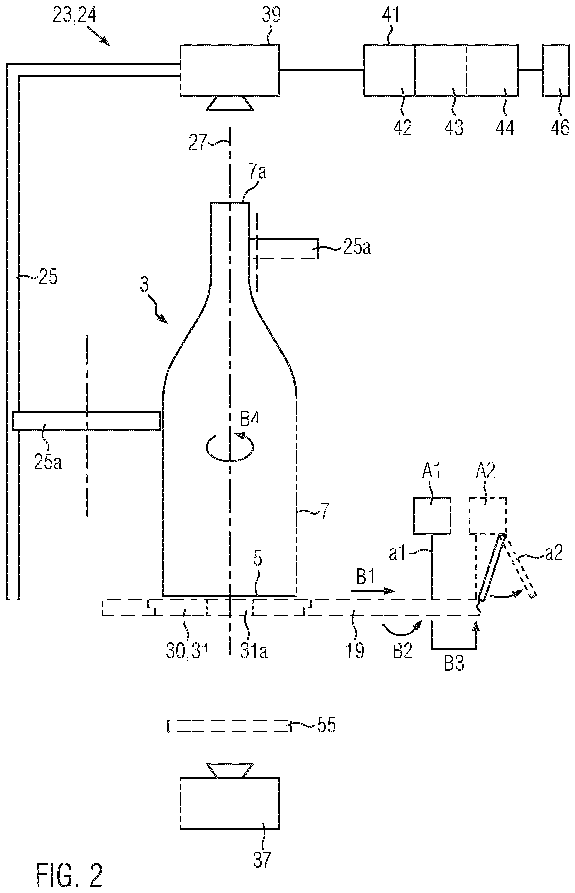

Figur 1 zeigt eine schematische Draufsicht einer Vorrichtung 1 zum Inspizieren von Gefäßen 3. Wie in Figur 2 dargestellt, handelt es sich bei den Gefäßen 3 z.B. um Kunststoff- oder Glasflaschen mit einem Boden 5 und einer Seitenwand 7. Alternativ kann es sich bei den Gefäßen 3 beispielsweise um andere Arten von Gläsern oder Flaschen handeln, z.B. um Marmeladen- oder Einmachgläser.

Wie in Figur 1 gezeigt, umfasst die Vorrichtung 1 eine Transporteinrichtung 9 zum Transportieren der Gefäße 3 entlang einer Transportrichtung 11. In der dargestellten Ausführungsform weist die Transporteinrichtung 9 ein Sternrad 13 auf, welches die Gefäße 3 entlang einer Kreisbahn transportiert. Das Sternrad 13 umfasst Halteelemente 15, die entlang einer Umfangsrichtung des Sternrads 13 hintereinander angeordnet sind. Die Gefäße 3 werden von einer Übergabestation 17 an das Sternrad 13 übergeben, indem sie zwischen benachbarten Halteelementen 15 des Sternrads 13 platziert werden. Durch Drehung des Sternrads 13 werden die Gefäße 3 entlang der Transportrichtung 11 gefördert. Während des Förderns werden die Gefäße 3 durch die Halteelemente 15 des Sternrads 13 über eine Transportfläche 19 der Transporteinrichtung 9 geschoben. Der Transport der Gefäße 3 entlang der Transportrichtung 11 erfolgt getaktet. Nachdem die Gefäße 3 in der Vorrichtung 1 inspiziert wurden, werden sie durch eine bezüglich der Transportrichtung 11 stromabwärts der Übergabestation 17 gelegene Entnahmestation 21 von der Transporteinrichtung 9 entnommen.

Bezüglich der Transportrichtung 11 zwischen der Übergabestation 17 und der Entnahmestation 21 ist eine Inspizierstation 23 vorgesehen, an der der Boden 5 des jeweils in der Inspizierstation 23 vorliegenden Gefäßes 3 auf Fehlstellen oder Defekte untersucht wird. Während des Inspizierens eines Gefäßes 3 durch die Inspizierstation 23 steht das Sternrad 13 vorzugsweise still. Es erfolgt also vorzugsweise während dieser Zeit kein Transport des Gefäßes 3 entlang der Transportrichtung 11.

Während des Inspizierens eines Gefäßes 3 in der Inspizierstation 23 befindet sich das Gefäß 3 in einer Inspizierposition. In der Inspizierposition befindet sich das Gefäß 3 in Ruhe relativ zum Sternrad 13. Wenn das Sternrad 13 während der Inspektion seinerseits stillsteht, befindet sich das Gefäß 3 während der Inspektion insgesamt in Ruhe, also auch relativ zur Umgebung der Transporteinrichtung 9, z.B. einer Werkshalle.

Figur 2 zeigt entlang des in Figur 1 mit I-I angedeuteten Schnittes eine Schnittansicht im Bereich der Inspizierstation 23. An der Inspizierstation 23 ist eine erfindungsgemäße Vorrichtung 24 zum Erzeugen einer Abbildung des Bodens 5 des Gefäßes 3 angeordnet. Die Vorrichtung 24 bzw. die wichtigsten Komponenten dieser Vorrichtung sind in Figur 2 dargestellt.

Das in Figur 2 dargestellte Gefäß 3 befindet sich in der Inspizierposition. In der Inspizierposition steht das Gefäß 3 mit seinem Boden 5 auf einer Tragstruktur 30. In der dargestellten Ausführungsform ist die Tragstruktur 30 in eine Aufnahme der Transportfläche 19 eingesetzt. Die Tragstruktur 30 kann gemäß Ausführungsformen austauschbar in die Transportfläche 19 eingesetzt sein. Alternativ kann die Tragstruktur 30 einstückig mit der Transportfläche 19 ausgebildet sein. Die Transportfläche 19 und die Tragstruktur 30 können miteinander bündige obere Flächen aufweisen, sodass die Flasche 3 durch das Sternrad 13 von der Transportfläche 19 auf die Trageinrichtung 30 geschoben werden kann.
Wie nachfolgend erläutert werden wird, kann die Tragstruktur 30 im Kontext der Erfindung eine Beleuchtungsstruktur 50 definieren. In Figur 2 sind verschiedene Möglichkeiten angedeutet, wie die Tragstruktur 30 und mit ihr die Beleuchtungsstruktur zwischen zwei Einzelaufnahmen verlagert werden können. Bspw. können die Tragstruktur 30 (optional zusammen mit der Transportfläche 19) zwischen zwei Einzelaufnahmen in einer translatorischen Bewegung B1, in einer bogenförmigen Bewegung B2, in einer im Wesentlichen U-förmigen, aus mehreren Abschnitten zusammengesetzten Bewegung B3 und/oder durch eine rotatorische Bewegung B4 um eine Achse 27 des Gefäßes 3 verlagert werden. Um diese Verlagerung zu bewirken, sind wiederum verschiedene Maßnahmen denkbar. Bspw. kann die Vorrichtung 24 über einen einzelnen Antrieb A1 oder über mehrere Antriebe A1, A2 verfügen, bspw. Servomotoren. Wenn mehrere Antriebe A1, A2 vorhanden sind, kann jeder für eine eigene Bewegungsrichtung oder Bewegungskomponente verantwortlich sein, sodass sich insgesamt bspw. eine bogenförmige oder U-förmige Verlagerung B2, B3 ergibt. Zu diesem Zweck ist jeder Antrieb A1, A2 über eine geeignete Wirkverbindung a1, a2 mit der Tragstruktur 30 und/oder der Transportfläche 19 verbunden. Ein konkretes Ausführungsbeispiel einer solchen Wirkverbindung a2 kann einen Hebelmechanismus umfassen, der in Figur 2 in zwei verschiedenen Schwenkpositionen schematisch dargestellt ist. Das Verschwenken eines solchen, mit der Tragstruktur 30 verbundenen Hebelmechanismus a2 kann eine bogenförmige Bewegung b2 bewirken. Sofern mehrere Antriebe A1, A2 vorgesehen sind, kann eine Steuerung (nicht dargestellt), bspw. ein Computer oder ein Mikrocontroller, für eine geeignete Synchronisation der verschiedenen Antriebe A1, A2 sorgen.

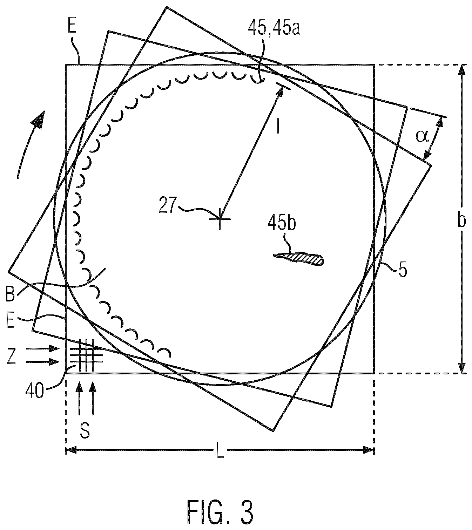

Oberhalb der Tragstruktur 30 ist eine Matrixkamera 39 mit vertikal nach unten zeigender Blickrichtung angeordnet. Das Gefäß 3 ist mit seiner Achse 27 im Wesentlichen zur Blickrichtung der Matrixkamera 39 zentriert, die von oben durch eine Öffnung 7a des Gefäßes 7 auf dessen Boden 5 gerichtet ist. Die Matrixkamera 39 zeichnet sich dadurch aus, dass ihre Bildpunkte (Pixel) 40, wie in Figur 3 dargestellt, in einer Mehrzahl von Zeilen Z und einer Mehrzahl von Spalten S angeordnet sind, d.h. auf einer Fläche (statt lediglich in einer einzigen Zeile). Die Vorrichtung 24 weist eine Fixiervorrichtung bzw. Haltestruktur 25 auf, die dazu konfiguriert ist, während des Aufnehmens der Serie von Einzelaufnahmen E das Gefäß 3 und die Matrixkamera 39 rotationsinvariant zueinander zu halten. Die Haltestruktur 25 kann einen Greifer 25a aufweisen, der dazu konfiguriert ist, das Gefäß 3 zu greifen und während er Inspektion in Ruhe zu halten. Alternativ kann die Haltestruktur 25 so ausgeführt sein, dass das Gefäß 3 zwischen Haltestruktur 25 und Sternrad 15 eingeklemmt wird, indem ein Klemmelement 25a seitlich auf das Gefäß 3 drückt.

Auf der der Matrixkamera 39 gegenüberliegenden Seite der Tragstruktur 30, d.h. im dargestellten Ausführungsbeispiel unterhalb der Tragstruktur 30, ist eine Lichtquelle 37 angeordnet. Die Lichtquelle 37 dient zum Durchleuchten des Bodens 5 des Gefäßes. Zu diesem Zweck kann die Tragstruktur 30 bspw. eine lichtdurchlässige Stellfläche 31 aufweisen, damit das von der Lichtquelle 37 ausgestrahlte Licht den Boden 5 des Gefäßes 3 durchdringen kann. In der Tragstruktur 30 oder der lichtdurchlässigen Stellfläche 31 können eine oder mehrere Aussparungen 31a vorhanden sein, durch die Licht hindurchtreten kann. Die Lichtquelle 37 kann eine gepulst betriebene Lichtquelle sein, bspw. eine Stroboskop-Lichtquelle. In diesem Fall kann das Aussenden ihrer Lichtpulse synchronisiert sein mit dem Betrieb der Matrixkamera 39, bspw. durch eine (nicht dargestellte) Steuerung der Vorrichtung 24.

Auf der Kameraseite kann in einer Variante eine Optik mit integriertem Strahlteiler und zwei angebauten Kameras 39 eingesetzt werden. Eine der Kameras 39 ist axial angeordnet, so wie in Figur 2 dargestellt, die andere ist unter 90° seitlich an die Optik angebaut. Die Lichtquelle 37 ist mit einem linearen Polfilter 55 versehen, die Kameraoptik mit einem linear polarisierenden Strahlteiler. Eine Kamera 39 sieht damit ein helles Bild, die andere Kamera 39 sieht im Normalfall nichts, weil die Polfilter gekreuzt angeordnet sind. Befindet sich jedoch im Flaschenboden 5 ein spannungsbehafteter Einschluss (Fehlstelle), so wird die Polarisationsebene gedreht und die zweite Kamera 39 sieht den Spannungsherd als helle Stelle. Die beiden Kameras 39 dienen somit der normalen Bodenkontrolle und der Stresskontrolle. Der Einsatz einer Station 23 mit nur einer Kamera ohne Polarisationsauswertung ist alternativ ebenfalls denkbar. Möglich ist eine Verwendung von Bildsensoren mit vorgelagertem Polfilter.

Figur 3 zeigt in schematischer Darstellung mehrere Einzelaufnahmen E, die von der Matrixkamera 39 aufgenommen werden. Bedingt durch die Ausrichtung der Matrixkamera 39 und die Anordnung ihrer Pixel 40 in mehreren Zeilen Z und Spalten S besteht jede Einzelaufnahme E in der Aufnahme eines streifenförmigen Bereichs B des Bodens 5 des Gefäßes 3 - vorzugsweise eines quadratischen Bereichs B. In Figur 3 ist der aufgenommene Bereich B des Bodens 5 die Schnittmenge zwischen dem kreisförmigen Boden 5 des Gefäßes 3 und der Gesamtfläche der Einzelaufnahme E. Wie eingangs erwähnt, müssen der Boden 5 oder der Querschnitt des Gefäßes 3 keine Kreisform haben, sondern können jede beliebige Form haben, z.B. rechteckig, quadratisch (allgemein: polygonal). Jede Einzelaufnahme E deckt eine bestimmte Länge L und eine bestimmte Breite b ab. In einer Variante sind die Länge L und die Breite b gleich groß (oder etwa gleich groß) und jeweils etwa 5 bis 10% kleiner als der Durchmessers (2x I) des Gefäßes 3.

Während vom Boden 5 eines Gefäßes 3 eine Serie von Einzelaufnahmen E erzeugt wird, erfolgt zwischen verschiedenen Einzelaufnahmen E eine Verlagerung der Beleuchtungsstruktur relativ zum Boden 5 des Gefäßes, z.B. eine Verschiebung und/oder eine Relativdrehung. Die Relativdrehung zwischen zwei Einzelaufnahmen E kann um einen Winkel α von bspw. 1° bis 15° erfolgen, vorzugsweise um einen Winkel von 2° bis 12°.

Die Vorrichtung 24 umfasst eine Auswerteeinheit 41, die in die Matrixkamera 39 integriert oder an die Matrixkamera 39 angeschlossen sein kann. Die Auswerteeinheit 41 umfasst einen Speicher 42 zum Speichern einer Serie von Einzelaufnahmen E sowie einen Computer 43, auf dem ein Computerprogrammprodukt 44 installiert ist. Die Auswerteeinheit 41 bzw. konkret das auf ihr installierte Computerprogrammprodukt 44 sind dazu eingerichtet, aus einer Serie von Einzelaufnahmen E eines Bodens 5 des Gefäßes 3 eine digitale Abbildung des Bodens 5 zusammenzusetzen. Figur 3 deutet an, auf welche Art und Weise dies erfolgen kann:

Im Boden 5 des Gefäßes 3 gibt es eine Mehrzahl von Sonderstellen 45. Bei den Sonderstellen 45 kann es sich um gezielt in den Boden 5 eingebrachte, z.B. umlaufende Einprägungen 45a handeln, oder aber um eine unerwünschte Fehlstelle 45b, bspw. eine Blase oder einen Riss. Ein Bilderkennungs-Modul des Computerprogrammprodukts 44 ist dazu eingerichtet, derartige Sonderstellen 45 in den Einzelaufnahmen E zu erkennen. Die Auswerteeinrichtung 41 ist dann dazu konfiguriert, die Einzelaufnahmen E jeweils derart zu manipulieren, dass eine optimale Überlagerung der Sonderstellen 45 in den jeweiligen Einzelaufnahmen E erreicht wird. Das Manipulieren kann ein Drehen der jeweiligen Einzelaufnahmen E (bspw., aber nicht zwingend, um die Achse 27 des Gefäßes 3), eine Translation der Einzelaufnahmen E in ihrer Längs- und/oder in ihrer Querrichtung und/oder ein Dehnen oder Stauchen der jeweiligen Einzelaufnahmen E umfassen.

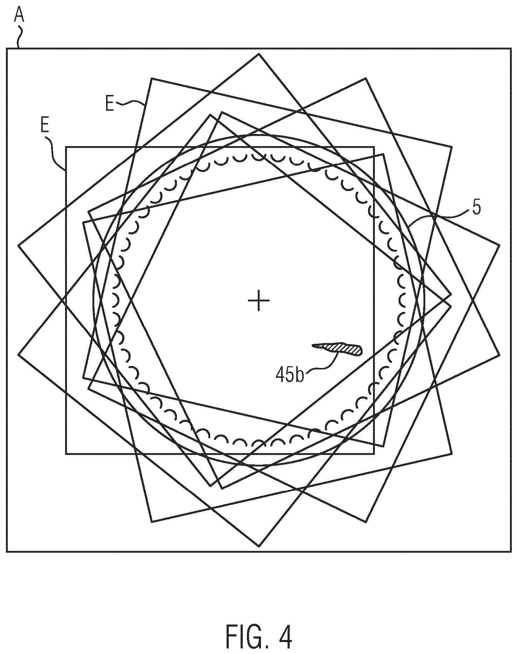

Wenn sämtliche Einzelaufnahmen E einer Serie von der Auswerteeinheit 41 verarbeitet sind, hat sie eine digitale Abbildung A des Bodens 5 des Gefäßes 3 erzeugt, wie in Figur 4 dargestellt. Die digitale Abbildung A ist aus den jeweiligen Einzelaufnahmen E zusammengesetzt, und zwar unter winkliger Anordnung der Einzelaufnahmen E relativ zueinander. Im Ergebnis wird auf diese Weise keine "Abwicklung" des Bodens 5 mit entsprechenden Verzerrungen erzeugt, sondern eine verzerrungsfreie Abbildung des Bodens 5 des Gefäßes 3.

Zum Erleichtern der Auswertung und des Zusammensetzens der Abbildung A kann die Auswerteeinheit 41 als Eingangsgröße den Winkel α (s. Fig. 3) berücksichtigen, um die die Beleuchtungsstruktur zwischen zwei Einzelaufnahmen E relativ zum Gefäß 3 verlagert, z.B. gedreht wird. Diese Eingangsgröße erleichtert der Auswerteeinheit 41 das Zusammensetzen der digitalen Abbildung A, da die Wahrscheinlichkeit des Bedarfs für ein Verlagern, Verschieben oder Verdrehen der Einzelaufnahmen E verringert wird.

Verfügt die Vorrichtung 1, die Inspizierstation 23 oder die Vorrichtung 24 über ein Display 46 (siehe Figur 2) so kann dort die digitale Abbildung A dargestellt werden. Alternativ kann die digitale Abbildung A maschinell ausgewertet werden. Wenn Fehlstellen 45b erkannt werden, kann das entsprechende Gefäß 3 manuell oder automatisch ausgeschleust werden.

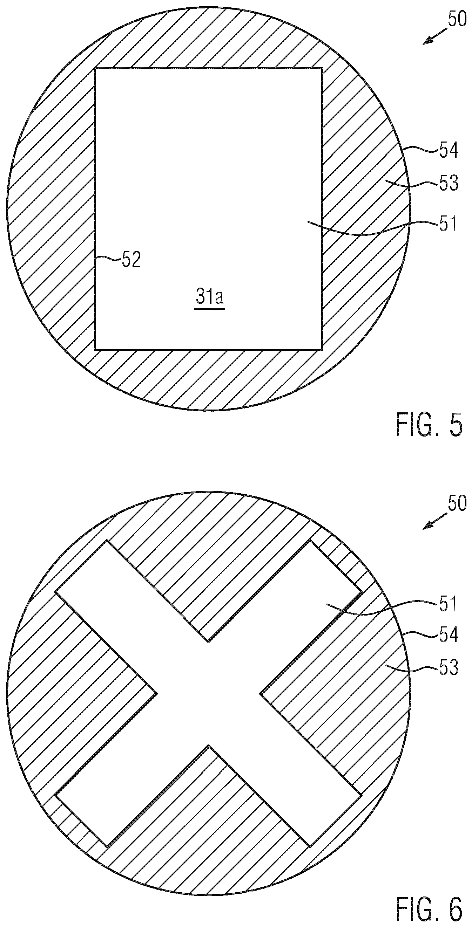

Figur 5 zeigt schematisch eine Draufsicht auf eine Beleuchtungsstruktur, 50. In diesem vergleichsweise einfachen Ausführungsbeispiel umfasst die Beleuchtungsstruktur 50 einen zentralen, hellen Beleuchtungsbereich 51 (d.h. einen Bereich hoher Lichtintensität), der eine rechteckige Kontur 52 aufweist. Der helle Bereich 51 ist umgeben von einem ringförmigen dunklen Bereich 53, d.h. einem Bereich geringer Lichtintensität. Erzeugt werden kann die Beleuchtungsstruktur 50, indem eine (bspw. in die Tragstruktur 19 einsetzbare oder integrierte) Maske 54 mit einer zentralen Aussparung 31a vorgesehen wird. Die zentrale Aussparung 31a definiert den Beleuchtungsbereich 51, d.h. den hellen Bereich 51 der Beleuchtungsstruktur 50. Die Aussparung 31a kann frei sein (d.h. als Loch ausgebildet) oder durch ein transparentes oder transluzentes Material gebildet sein, bspw. Saphirglas. Das Verlagern der Beleuchtungsstruktur 50 relativ zum Boden 5 des Gefäßes 3 kann bewirkt werden, indem die Maske 54 verlagert wird. Die Größe der Aussparung 31a kann so gewählt sein, dass sie kleiner ist als eine Abmessung des Gefäßes 3, sodass das Gefäß 3 während des Aufnehmens der Einzelaufnahmen E auf der Maske 54 stehen kann.

Das Verwenden einer Maske 54 hat den Vorteil, dass es den Einsatz einer groß- oder sogar vollflächigen Lichtquelle 37 ermöglicht sowie optional den Einsatz eines Polfilters 55 zwischen Lichtquelle 37 und Gefäß 3 (siehe Figur 2), und dass zum Verlagern der Beleuchtungsstruktur 50 während der Inspektion weder die Lichtquelle 37 noch (falls vorhanden) der Polfilter 55 relativ zum Gefäß 3 verlagert werden müssen.

Figur 6 zeigt ein zweites Ausführungsbeispiel einer Beleuchtungsstruktur 50. Es unterscheidet sich lediglich dadurch von dem in Figur 5 gezeigten Ausführungsbeispiel, dass der Beleuchtungsbereich 51, d.h. der helle Bereich der Beleuchtungsstruktur 50, nicht quadratisch, sondern kreuzförmig geformt ist. Diverse andere Formen des Beleuchtungsbereichs 51 sind denkbar, bspw. eine rechteckige Form.

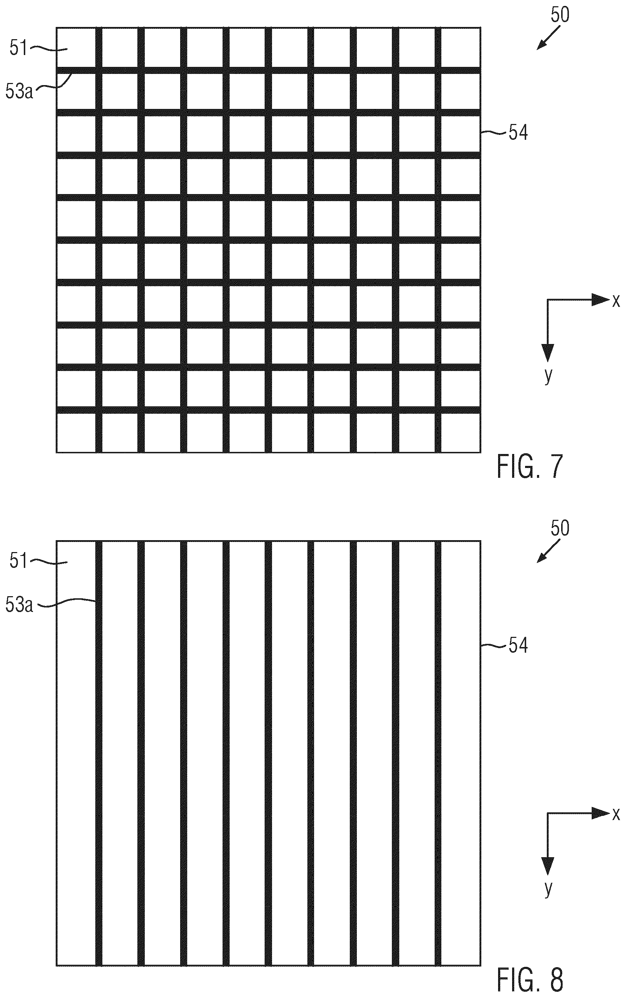

Figur 7 zeigt ein weiteres Ausführungsbeispiel einer Beleuchtungsstruktur 50. Diese Beleuchtungsstruktur 50 ist gitterförmig, d.h. sie umfasst eine regelmäßige, zweidimensionale Anordnung von hellen Feldern 51, zwischen denen sich jeweils dunkle Bereiche oder Stege 53a befinden. Im vorliegenden Ausführungsbeispiel hat die gitterförmige Beleuchtungsstruktur 50 eine Anzahl von 10 x10 hellen Feldern 51.

Während Figur 7 eine Beleuchtungsstruktur 50 in Form eines zweidimensionalen Gitters zeigt, zeigt Figur 8 ein Ausführungsbeispiel einer Beleuchtungsstruktur 50 in einer streifenförmigen bzw. eindimensionalen Gitterform. In diesem Ausführungsbeispiel sind lediglich in y-Richtung Stege 53a vorgesehen. Zwischen den Stegen 53a erstrecken sich streifenförmige helle (d.h. ausgeleuchtete) Felder bzw. Streifen 51. Denkbar und vorteilhaft sind Ausführungsformen einer solchen streifenförmigen Beleuchtungsstruktur 50, bei der die Breite der Stege 53a in Richtung x etwa 40 bis 60 Prozent der Breite eines hellen Bereichs (Streifens) 51 in Richtung x beträgt. Mit anderen Worten hat in einem solchen Ausführungsbeispiel jeder Steg 53a etwa die halbe Breite eines hellen Bereichs bzw. Streifens 51. Konkret könnte bspw. jeder Steg 53a eine Breite von 5 bis 10 Millimetern aufweisen, während jeder helle Bereich bzw. Schlitz oder Streifen 51 in Richtung x eine Ausdehnung von 10 bis 20 Millimetern aufweist. Variationen dieser Proportionen sind selbstverständlich denkbar.

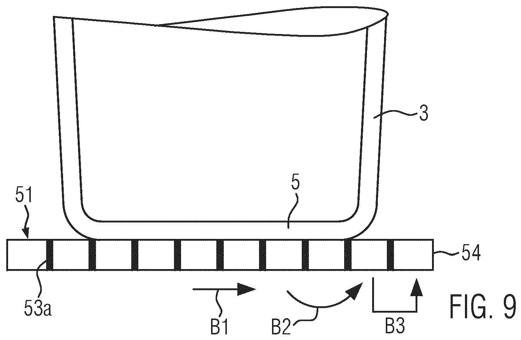

Ein Vorteil einer gitterförmigen Beleuchtungsstruktur 50 wie in Fig. 8 oder 9 liegt darin, dass die Stege 53a eine erhöhte Festigkeit und damit eine verbesserte Tragfähigkeit der Maske 54 für das Gefäß 3 gewährleisten können. Ein weiterer Vorteil wird deutlich im Vertikalschnitt, der in Figur 9 dargestellt ist. Angedeutet ist hier der untere Teil des Gefäßes 3, das während der Inspektion mit seinem Boden 5 auf der Maske 54 als Teil der Tragstruktur 19 steht. Die gitterförmige Beleuchtungsstruktur 50 ermöglicht das Zusammensetzen einer (digitalen) Aufnahme A von jedem Punkt des Gefäßbodens 50 bereits mit einer minimalen Anzahl von lediglich zwei Einzelaufnahmen E. Zu diesem Zweck muss lediglich die Beleuchtungsstruktur 50 zwischen zwei Einzelaufnahmen E sowohl in x-Richtung als auch in y-Richtung (siehe das Koordinatensystem in Figur 7) um eine Strecke versetzt werden, die keinem ganzzahligen Gitterabstand entspricht. Beispielsweise kann eine Verlagerung in x-Richtung und in y-Richtung um z.B. jeweils den 0,4-fachen bis 0,6-fachen Gitterabstand, bspw. den 0,5-fachen Gitterabstand, erfolgen. Die Verlagerung der Beleuchtungsstruktur 50 kann durch eine Bewegung der Maske 54 erreicht werden. Dafür stehen verschiedene Möglichkeiten zur Verfügung. Beispielsweise könnte die Maske 54 durch eine ausschließlich translatorische Bewegung B1 in ihrer Ebene verlagert werden. Alternativ könnte die Maske 54 durch eine bogenförmige Bewegung B2 zwischen zwei Einzelaufnahmen verlagert werden. Die bogenförmige Bewegung B2 hat den Vorteil, dass während des Verlagerns der Beleuchtungsstruktur 50 geringere oder sogar gar keine Reibungskräfte auf den Boden 5 des Gefäßes 3 einwirken, was die Positionsstabilität des Gefäßes 3 weiter erhöht. Dies könnte durch eine U-förmige Bewegung B3 noch weiter verbessert werden, bei der die Struktur bzw. Maske 54 erst axial nach unten bewegt wird, bis kein Kontakt mehr zum Gefäß 3 besteht, und dann erst translatorisch verschoben wird.

Als Matrixkamera 39 kann je nach technischer Ausführung des Gesamtsystems und vor allem der Anzahl aufzunehmender Bilder pro Behälter und der Anzahl Behälter pro Zeiteinheit eine schnell bis sehr schnell arbeitende Kamera verwendet werden. Es kommen z.B. Kameras mit einer Schnittstelle von 1, 5, 10 oder mehr Gigabit pro Sekunde in Frage. Der Bildbereich der Kamera 39 wird vorzugsweise so groß gewählt, dass stets der komplette Beleuchtungsbereich 51 aufgenommen wird - egal in welcher Ausrichtung er sich jeweils relativ zum Bild befindet. Eine Synchronisierung zwischen dem aufgenommenen Bild und der jeweiligen Ausrichtung der Beleuchtungsstruktur 50 kann entweder allein durch die Bildverarbeitung erfolgen, indem bspw. eine Bilderkennungs-Software den beleuchteten Bereich 51 in der jeweiligen Einzelaufnahme E selbstständig sucht. Alternativ kann zur Verbesserung der Prozessstabilisierung die gezielt vorgenommene Verlagerung der Beleuchtungsstruktur 50 zwischen den Einzelaufnahmen E berücksichtigt werden, bspw. die Größe der gezielt vorgenommenen Verschiebung und/oder Rotation der Beleuchtungsstruktur.

Denkbar ist es, dass die Gesamtdauer des Aufnehmens einer Serie S von Einzelaufnahmen in weniger als 100 Millisekunden abgeschlossen ist, vorzugsweise sogar innerhalb von 75 Millisekunden oder weniger. Auf diese Weise wird ein sehr hoher Durchsatz der Inspektionsvorrichtung ermöglicht, d.h. eine hohe Zahl pro Zeiteinheit inspizierten Gefäßen.

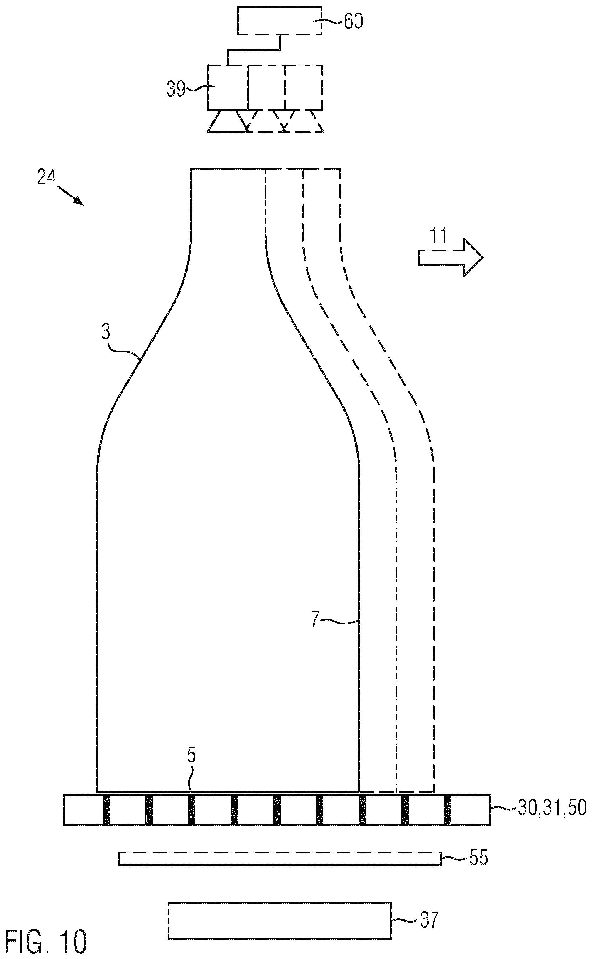

Figur 10 zeigt schematisch in einer Seitenansicht ein weiteres Ausführungsbeispiel einer erfindungsgemäßen Vorrichtung 24 zum Erzeugen einer Abbildung A des Bodens 5 eines Gefäßes 3. In diesem Ausführungsbeispiel erfolgt der Transport der Gefäße 3, während sie mit ihrem Boden 5 auf einer Tragstruktur 30 stehen, bspw. einer lichtdurchlässigen Stellfläche 31. Die Stellfläche 31 ist so konfiguriert, dass sie eine bspw. streifenförmige Beleuchtungsstruktur 50 mit abwechselnd hellen und dunklen Streifen definiert. Die Stellfläche 31 wird von unten beleuchtet durch eine Lichtquelle 37.

Der Transport der Trinkgefäße 3 erfolgt in einer Transportrichtung 11, bspw. auf einem Sternrad 13 (siehe Figur 1). Schematisch dargestellt sind in Figur 10 drei verschiedene Zustände, und zwar ein Ausgangszustand (mit durchgezogenen Linien des Gefäßes), sowie mit gestrichelten Linien die Positionen des Gefäßes 3 zu zwei späteren Zeitpunkten. Denkbar wäre es, dass sich das Gefäß 3 in der mittleren der drei Positionen im Stillstand befindet (was besonders präzise Aufnahmen ermöglicht), und dass sich die anderen beiden Positionen kurz vor und kurz nach dem Stillstand befinden, bspw. in Abständen von ca. 7 bis 14 mm von der Stillstandposition.

Die Matrixkamera 39 wird in diesem Ausführungsbeispiel temporär synchron mit der Bewegung des Gefäßes 3 mitbewegt. Dafür sorgt ein Aktuator 60, der eine Bewegung der Matrixkamera 39 bspw. zeitweise koppelt mit der Transportgeschwindigkeit des Gefäßes 3 auf dem Sternrad 13. In diesem Ausführungsbeispiel könnte die von der Matrixkamera 39 aufgenommene Serie bspw. aus drei Einzelaufnahmen E bestehen. Denkbar wäre jedoch auch eine beliebige andere (insbesondere höhere) Anzahl von Einzelaufnahmen E.

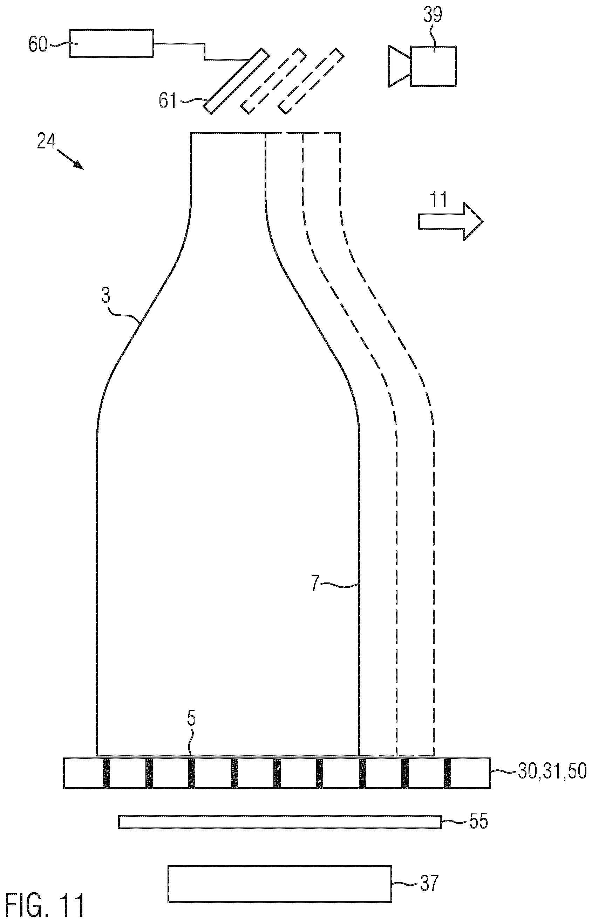

Figur 11 zeigt eine Abwandlung des Ausführungsbeispiels aus Figur 10. Im Unterschied zu Figur 10 bewegt der Aktuator 60 hier nicht die Matrixkamera 39 mit dem Gefäß, sondern der Aktuator 60 bewegt eine Kameraoptik 61 temporär synchron mit der Bewegung des Gefäßes 3 entlang der Transportrichtung 11. Bei der Kameraoptik 61 kann es sich bspw. um einen Spiegel oder um eine Spiegeloptik handeln.

Ausgehend von den dargestellten Ausführungsbeispielen und den beigefügten Ansprüchen kann die Erfindung in verschiedener Weise modifiziert werden. Eine Möglichkeit besteht zum Beispiel darin, bereits Einzelbilder E aufzunehmen und zu inspizieren (visuell oder maschinell), bevor oder sogar ohne dass aus mehreren Aufnahmen eine digitale Abbildung A des Bodens 5 des Gefäßes 3 zusammengesetzt wird.

## Patentansprüche

1. Verfahren zum Erzeugen einer Abbildung (A) eines transluzenten oder transparenten Bodens (5) eines Gefäßes (3),
wobei eine Matrixkamera (39) mit in einer Mehrzahl von Zeilen (Z) und einer Mehrzahl von Spalten (S) angeordneten Pixeln (40) vorgesehen ist,
wobei mittels der Matrixkamera (39) eine Serie von Einzelaufnahmen (E) von Bereichen (B) des Bodens (5) des Gefäßes (3) aufgenommen wird, wobei sich einander benachbarte Einzelaufnahmen (E) abschnittsweise überlappen,
wobei während einer Einzelaufnahme (E) der Boden (5) des Gefäßes (3) mittels einer auf der der Matrixkamera (39) gegenüberliegenden Seite des Bodens (5) des Gefäßes (3) angeordneten Lichtquelle (37) durchleuchtet wird,
und wobei aus der Serie von Einzelaufnahmen (E) eine digitale Abbildung (A) des Bodens (5) des Gefäßes (3) zusammengesetzt wird,
**dadurch gekennzeichnet, dass** der in einer Einzelaufnahme (E) aufgenommene Bereich (B) des Bodens (5) des Gefäßes (3) definiert wird durch eine Beleuchtungsstruktur (50),
dass zwischen zwei Einzelaufnahmen (E) die Beleuchtungsstruktur (50) relativ zum Boden (5) des Gefäßes (3) verlagert wird,
und dass während des Aufnehmens der Serie von Einzelaufnahmen (E) das Gefäß (3) und die Matrixkamera (39) rotationsinvariant zueinander bleiben.

2. Verfahren nach Anspruch 1, **dadurch gekennzeichnet, dass** das Verlagern der Beleuchtungsstruktur (50) zwischen zwei Einzelaufnahmen (E) relativ zum Boden (5) des Gefäßes (3) translatorisch und/oder rotatorisch erfolgt.

3. Verfahren nach einem der vorangehenden Ansprüche, **dadurch gekennzeichnet, dass** die Beleuchtungsstruktur (50) einen rechteckigen, vorzugsweise quadratischen, oder gitterförmigen oder streifenförmigen Beleuchtungsbereich (51) definiert.

4. Verfahren nach Anspruch 3, **dadurch gekennzeichnet, dass** der Beleuchtungsbereich (51) definiert wird durch eine oder mehrere Aussparungen (31a) in einer unterhalb des Bodens (5) angeordneten Maske (54).

5. Verfahren nach Anspruch 4, **dadurch gekennzeichnet, dass** die Maske (54) zwischen zwei Einzelaufnahmen (E) in einer rotatorischen, translatorischen, bogenförmigen oder kombinierten Bewegung (B1, B2, B3, B4) verlagert wird.

6. Verfahren nach einem der vorangehenden Ansprüche, **dadurch gekennzeichnet, dass** der Boden (5) des Gefäßes (3) während des Aufnehmens der Einzelaufnahmen (E) von einer unterhalb des Bodens (5) angeordneten Tragstruktur (19) beabstandet ist.

7. Verfahren nach einem der vorangehenden Ansprüche, **dadurch gekennzeichnet, dass** die von der Matrixkamera (39) aufgenommenen Einzelaufnahmen (E) eine rechteckige oder quadratische Form aufweisen.

8. Verfahren nach einem der vorangehenden Ansprüche, **dadurch gekennzeichnet, dass** die Serie von Einzelaufnahmen (E) erzeugt wird, während das Gefäß (3) in einer Transportrichtung (11) relativ zur Beleuchtungsstruktur (50) transportiert wird.

9. Vorrichtung (24) zum Erzeugen einer Abbildung (A) eines transluzenten oder transparenten Bodens (5) eines Gefäßes (3), umfassend eine Matrixkamera (39) mit in einer Mehrzahl von Zeilen (Z) und einer Mehrzahl von Spalten (S) angeordneten Pixeln (40), eine Lichtquelle (37) zum Durchleuchten des Bodens (5) des Gefäßes (3), und eine Maske (54) zum Erzeugen einer Beleuchtungsstruktur (50),
wobei ein Speicher (43) zum Speichern einer mittels der Matrixkamera (39) aufgenommenen Serie von Einzelaufnahmen (E) von Bereichen (B) des Bodens (5) des Gefäßes (3) vorgesehen ist,
und wobei die Vorrichtung (24) eine Auswerteeinheit (41) aufweist, die dazu eingerichtet ist, aus der Serie von Einzelaufnahmen (E) eine digitale Abbildung (A) des Bodens (5) des Gefäßes (3) zusammenzusetzen,
**dadurch gekennzeichnet, dass** die Vorrichtung (24) konfiguriert ist zum Verlagern der Beleuchtungsstruktur (50) relativ zum Boden (5) des Gefäßes (3) zwischen zwei Einzelaufnahmen (E),
und dass die Vorrichtung (24) eine Haltestruktur (25) aufweist, die dazu konfiguriert ist, während des Aufnehmens der Serie von Einzelaufnahmen (E) das Gefäß (3) und die Matrixkamera (39) rotationsinvariant zueinander zu halten.

10. Vorrichtung nach Anspruch 9, **dadurch gekennzeichnet, dass** die Beleuchtungsstruktur (50) den in einer Einzelaufnahme (E) aufgenommenen Bereich (B) des Bodens (5) des Gefäßes (3) definiert.

11. Vorrichtung nach einem der Ansprüche 9 oder 10, **dadurch gekennzeichnet, dass** die Vorrichtung (24) konfiguriert ist zum translatorischen und/oder rotatorischen Verlagern der Beleuchtungsstruktur (50) relativ zum Boden (5) des Gefäßes (3) zwischen zwei Einzelaufnahmen (E).

12. Vorrichtung nach einem der Ansprüche 9 bis 11, **gekennzeichnet durch** eine Tragstruktur (30) zum Tragen des Gefäßes (3), wobei die Tragstruktur (30) eine Maske (54) aufweist oder bildet.

13. Vorrichtung nach einem der Ansprüche 9 bis 12, **dadurch gekennzeichnet, dass** die Beleuchtungsstruktur (50) einen rechteckigen, vorzugsweise quadratischen, oder gitterförmigen Beleuchtungsbereich (51) definiert.

14. Vorrichtung nach einem der Ansprüche 9 bis 13, **dadurch gekennzeichnet, dass** die Haltestruktur (25) einen Greifer (25a) zum Greifen oder Klemmen des Gefäßes (3) umfasst.

15. Vorrichtung nach einem der Ansprüche 9 bis 14, **dadurch gekennzeichnet, dass** sie einen Aktuator (60) aufweist, der dazu konfiguriert ist, die Matrixkamera (39) oder eine Kameraoptik (61) der Matrixkamera (39) temporär synchron zu einer Bewegung des Gefäßes (3) zu bewegen.
